# EUROPEAN PATENT APPLICATION

(11) **EP 2 803 511 A1**
(43) Date of publication of application: **19.11.2014**
(21) Application number: 13167814.6
(22) Date of filing: 15.05.2013
(51) Int. Cl.: B60D 1/64, B60D 1/06

(54) **Towing assembly**

(71) Applicant: Thule Towing Systems B.V., 7951 CX Staphorst (NL)
(72) Inventor: Steeman, Jonne, 9285 VA Buitenpost (NL)
(74) Representative: Valea AB

(57) **Abstract**

A socket assembly (3) for use with a retractable or detachable tow hook (2) for a vehicle is disclosed. The socket assembly (3) comprises a socket (4) for providing an electrical connection between a trailer or load carrier and the vehicle. The socket assembly (3) is adapted to be mounted to the vehicle, and the socket (4) is movable between a retracted position and a use position. The socket assembly comprises a locking mechanism for locking the socket in the use position, whereby the locking mechanism is adapted to be unlocked such as to allow the socket (4) to be moved from the use position to the retracted position.

Further, a trailer towing assembly (1) comprising a tow hook (2) and the socket assembly (3) is disclosed.

## Description

### TECHNICAL FIELD

Trailer-towing assembly for vehicle, whereby the trailer-towing assembly comprises a tow hook for towing a trailer and a socket assembly for providing electrical connection of the trailer to the vehicle.

### BACKGROUND OF THE INVENTION

A wide variety of towing assemblies enabling different kinds of trailers to be towed by a vehicle are known. For example, tow hooks comprising a coupling neck and a coupling bar are commonly used. Two common types of trailers are load trailers and caravans. Also, tow hooks may be used to support load carriers, such as bicycle racks, at the rear of a vehicle. Thereby, the flexibility and the utility of vehicles can be increased, by enabling increasing the load capacity and/or the use of the vehicle for leisure activities.

An electrical connection is usually provided between the trailer or load carrier and the vehicle, in order to provide power supply for rear lights of the trailer or load carrier and for providing power supply to the brakes of a trailer. This is commonly realized by a socket arrangement at the rear part of the vehicle, in some cases together with a tow hook assembly, allowing a socket and plug connection between the trailer and the vehicle. This plug and socket connection is often of the bayonet type, where the plug has to be rotated and pushed into position in the socket.

Although the advantages offered by tow hooks, their presence might be undesired when not in use, for example in view of safety and aesthetics. One way to overcome this problem is the use of detachable tow hooks, which can be removed from the vehicle and stowed away, for example in the trunk of the vehicle, when not in use.

Another solution is retractable tow hooks, where the tow hook can be retracted to a position underneath the vehicle when not in use, such as not to protrude from the vehicle, while still being easily put back in the use position. Preferably, it must also be possible to safely stow away the socket for electrical connection. Such a retractable tow hook assembly is known from EP 1 380 447 B1, which discloses an arrangement where the coupling neck of the tow hook is arranged to push the socket into the retracted position during the retraction of the tow hook from its use position to its retracted position.

There are, however, some problems associated with the solution according to EP 1 380 447 B1. In order to connect or disconnect the electrical plug of the trailer to the socket, the plug or bayonet has to be pushed and eventually also rotated in order to achieve this connection. However, with the construction presented in EP 1 380 447 B1, there is a high chance that the user involuntarily causes the socket assembly to be rotated and pushed towards its retracted position during this connection. Therefore, it will be cumbersome to obtain a proper electrical connection, and the user runs the risk of injury, for example due to impact with the structural parts at the rear of the vehicle. EP 1 380 447 B1 does not disclose any way of preventing such problems. In order to prevent such unintended movement, the user will have to hold the socket with one hand, such as to provide a counter force while connecting the plug to the socket using the other hand. This makes the connection cumbersome.

### SUMMARY OF THE INVENTION

The socket assembly disclosed herein below aims at solving the above problems. According to the present invention, a locking mechanism is provided which is adapted to lock the socket in its use position, such that an involuntary rotation or other movement of the socket during connection of the plug is prevented. Further, a towing assembly comprising a retractable tow hook and the socket assembly is disclosed. According to preferred embodiments, the towing assembly is adapted such that the socket is automatically moved between the use position and the retracted position by the movement of the tow hook between the use position and the retracted position.

Accordingly, a socket assembly for use together with a retractable or detachable tow hook for a vehicle is provided. The socket assembly comprises a socket for providing an electrical connection between a trailer or load carrier and the vehicle, and is adapted to be mounted to the vehicle. The socket is arranged to be movable between a retracted position and a use position. The socket assembly comprises a locking mechanism for locking the socket in the use position, the locking mechanism being adapted to be unlocked such as to allow the socket to be moved from the use position to the retracted position. By the electrical connection between the trailer or load carrier and the vehicle a power supply is provided for the rear-, side-, and/or turning lights of the trailer or load carrier and for the trailer brake, if a trailer provided with brakes is connected to the tow hook. By the locking means the socket is locked in a fixed position when in the use position, such that the socket stays in this position also during connection or disconnection of the plug. There is no need for the user to manually hold the socket in order to keep it fixed.

The socket assembly can be retrofitted to vehicles equipped with a detachable or retractable tow hook described above, although a retractable tow hook is preferable. The socket assembly can be mounted either directly to the vehicle, by being mounted to the chassis, or indirectly, for example by being mounted to a tow hook support unit. As will be clear from the description below, when using the socket assembly together with a retractable tow hook, the socket is advantageously arranged relative to the tow hook such that the tow hook, during its movement to the retracted position, can cause the locking mechanism to become unlocked and cause the socket to be moved together with the tow hook to the retracted position.

The term "use position" is to be understood as the position the tow hook and the socket shall have when being ready for towing a trailer or supporting a load carrier. The tow hook and the socket are then folded out such as to protrude from the vehicle, enabling connection and subsequent towing of the trailer. In this position, the socket is locked in a fixed position by the locking mechanism. Retractable tow hooks are generally also provided with an arrangement keeping them fixed in the use position, until the user applies a force or performs other action to move them to the retracted position.

The term "retracted position" is to be understood as the position a retractable tow hook and the socket shall have when being folded underneath the vehicle such as to be stowed away when not being in use or being ready for use. Preferably, in this position no part of the towing assembly or the socket assembly is protruding from the vehicle. Even more preferably, the tow hook assembly is not visible when viewing the vehicle from a normal angle, when being in the retracted position. Means are provided for keeping the towing assembly or the socket assembly in the retracted position, until the user performs an action to move the retractable tow hook or the socket to the use position.

Further, both the tow hook and the socket may have one or more intermediate positions between the use position and the retracted position. Especially in such an intermediary position the tow hook will come into abutment with the locking mechanism of the socket assembly, thereby causing the locking mechanism to become unlocked.

The socket assembly may be adapted to be mounted to a unit supporting the tow hook.

Furthermore, the locking mechanism may be adapted to be unlocked by the retractable tow hook. Thereby, the locking mechanism will be automatically unlocked by the movement of the retractable tow hook from the use position toward the retracted position. Preferably, the locking assembly may be unlocked as a portion of the tow hook abuts against a portion of the locking assembly whereby a force is applied to the locking assembly as the tow hook moves to the retracted position, thereby causing the locking mechanism to become unlocked. In this case, the user does not have to manually unlock the locking mechanism.

The locking mechanism may comprise a first locking member adapted to cooperate with a second locking member. The first locking member is connected to the socket, and the second locking member is arranged to prevent motion of the first locking member thereby locking the socket in the use position. The second locking member may be a part of the vehicle or of the socket assembly. The first locking member may be an element arranged such that at least a portion thereof engages with the second locking member in a default position, such that a movement of the socket is prevented. The locking mechanism is unlocked as the first locking member is moved to a position where it is no longer in engagement with the second locking member, whereby a movement of the socket is no longer prevented.

The first locking member may comprise an abutment portion having a surface adapted for abutment of the retractable tow hook. This abutment portion, and thus the surface adapted for abutment of the retractable tow hook, can be realised in different ways. What is important is that the abutment surface is shaped and positioned such that a portion of the tow hook will, during the movement of the tow hook from the use position to the retracted position, abut against it such that the locking mechanism becomes unlocked, and, preferably, that as the movement of the tow hook toward the retracted position continues, the socket follows the movement to the retracted position.

The first locking member may be adapted to perform a pivoting motion, whereby a locking portion of the first locking member is moved out of engagement with the second locking member, whereby the locking mechanism is unlocked by the pivoting motion. Especially, the first locking member may perform the pivoting motion with respect to the socket, which stays fixed in place until the locking mechanism has become unlocked by the displacement of the locking portion.

The first locking member may be adapted to perform the pivoting motion around a pivot axis, whereby the pivot axis and the locking portion are located on opposite sides of the socket. Thereby, an efficient locking mechanism will be realised. Depending on the specific arrangement and dimensions of the first locking member, even a relatively small deflection of the abutment portion may cause a substantial deflection of the locking portion.

The first locking member may be arranged such as to partly enclose the socket. This can, for example, be realised by a part of the first locking member being shaped as a cap which surrounds at least a portion of the circumference of the socket. This cap may form the abutment portion. By applying a force to the cap, the unlocking of the locking mechanism can be actuated.

The first locking member may be adapted to perform a translational motion, whereby a locking portion of the first locking member is displaced from engagement with the second locking member, whereby the locking mechanism is unlocked by the translational motion. Especially, the first locking member is mounted to the socket such that the translational motion is performed with respect to the socket.

The locking mechanism may thus be unlocked either by a pivoting motion of the first locking member or by a translational movement of the first locking member. Alternatively, the locking mechanism may be adapted such as to become unlocked by a combination of a pivoting and a translational motion of the first locking member, which causes the locking portion to be moved out of engagement with the second locking member.

The socket assembly may comprise a torsion spring for resisting the pivoting motion and/or a spring for resisting the translational motion of the first locking member. Thereby, the socket assembly will be urged toward its locked position. Thereby, when moving the socket assembly from the retracted position to the use position, the socket assembly will be automatically locked in the use position. The electrical plug of the trailer can then be connected to the socket without the user being required to manually lock the socket assembly in the use position, prior to connecting the plug.

The socket may be arranged to be moved between the use position and the retracted position by a pivot motion of the socket, or, more specifically, a pivot motion of the element to which it is mounted. The locking mechanism is adapted to block this pivot motion. Additionally, a torsion spring may be provided to resist the pivot motion of the socket. This torsion spring will urge the socket toward the use position. Thereby, if the retractable tow hook, which, when in the retracted position may function to keep the socket in the retracted position by blocking its movement toward the use position, is moved to the use position the socket will automatically follow and be moved into the use position. In the case when the socket assembly is adapted to be used together with a detachable tow hook, a second locking mechanism may be provided to lock the socket in the retracted position. Analogously, by the provision of the torsion spring the socket will move automatically to the use position upon unlocking of the second locking mechanism.

A trailer towing assembly for a vehicle is also provided. The towing assembly comprises a tow hook and a socket assembly as disclosed herein. The tow hook is arranged to be movable between a retracted position and a use position, and the locking mechanism is adapted to be unlocked by the tow hook.

The tow hook comprises a coupling neck preferably having a coupling ball at its end, to which a trailer can be connected. However, instead of a coupling ball, the coupling neck can be provided with ny other member such as a NAS member, a flange for connecting a coupling ball, or a Thule connector for example. The socket assembly comprises the socket to which the electrical plug of the trailer can be connected. Preferably, it also comprises a tow cross bar via which the socket is mounted to the vehicle and which allows the movement of the socket between the use position and the retracted position. For example, the socket may be fixedly mounted to a socket plate or other element, which is pivotally connected to a support bracket, where the support bracket is fixed with respect to the vehicle.

The socket and the tow hook may be arranged such that the socket is adapted to be moved to the retracted position by movement of the tow hook to the retracted position after the locking mechanism is unlocked. Advantageously, as described above, the locking mechanism is adapted to become unlocked by the tow hook, preferably by abutment of a portion of the tow hook to an abutment portion of the first locking member.

The socket may be adapted to follow a movement of the tow hook to the retracted position after the locking mechanism is unlocked.

The locking mechanism may be adapted to be unlocked by abutment of at least a portion of the tow hook to at least a portion of the locking mechanism.

Thus, the locking mechanism described herein will act as an anti-rotation system so that a socket plate or other element, to which the socket is mounted, is blocked from rotating or otherwise moving in any direction when it is in the use position. The user can then insert the plug of the trailer or load carrier without concerns regarding accidental movements of the socket. When rotating and/or pushing the plug into the connected position the socket plate will not move, which makes the coupling operation easier, since the user does not have to counter hold the socket plate in order to prevent the socket from rotating. The locking mechanism is constructed such that it can be unlocked by applying a force to one of its elements, whereupon the socket plate or other element to which the socket is mounted, and thus also the socket, is not blocked from rotation any more. Preferably, if the force applied is removed from this element without moving the socket away from its use position, the locking mechanism will fall back to its locked position such that the socket is locked in the use position. The locking mechanism can be unlocked either manually by the user or by the retractable tow hook during its movement to the retracted position.

The tow hook assembly is arranged such that when the tow hook is moved from the use position to the retracted position it will at some point come to abut against a portion of the locking mechanism, in a preferred embodiment it will push against a cap partly surrounding the socket, whereby it unlocks the locking mechanism, and subsequently pushes the socket into the retracted position. For example, the socket plate can be located with respect to the tow hook such that in one embodiment the coupling neck can unlock the socket while being moved into its retracted position. Thereby, solutions to the problems described above are provided.

According to an aspect, the invention relates to an accessory item assembly for use together with a retractable tow hook for a vehicle. The accessory item assembly comprises an accessory for providing an added function or feature to a trailer, load carrier or the vehicle. Wherein the accessory item assembly is adapted to be mounted to the vehicle. The accessory item assembly is arranged to be movable between a retracted position and a use position. The accessory item assembly further comprises a locking mechanism for locking the accessory item assembly in the use position. The locking mechanism is adapted to be unlocked such as to allow said accessory item assembly to be moved from the use position to the retracted position by the retractable tow hook.

The accessory could be a socket for an electrical component as mentioned above, a detector, a sensor, a camera, a light, a safety eye, combinations thereof, or any other type of accessory providing an added function or feature. It is clear that the lock mechanism and the other features described above with respect to the socket assembly could be applicable to the accessory item assembly as well.

### BRIEF DESCRIPTION OF THE DRAWINGS

The present disclosure will hereinafter be further explained by means of non-limiting examples with reference to the appended figures where:
Fig. 1 schematically shows a trailer towing assembly in the use position.
Fig. 2 schematically shows a socket assembly locked in the use position.
Fig. 3 schematically shows a socket assembly locked in the use position, viewed from a different angle than in FIG. 2.
Fig. 4 schematically shows the socket assembly of Fig. 3 in the unlocked position, while still being in the use position.
Fig. 5 schematically shows the trailer towing assembly in an intermediate position, just before unlocking the locking mechanism.
Fig. 6 schematically shows the trailer towing assembly in the retracted position.
Fig. 7 schematically shows the trailer towing assembly in the retracted position seen from another angle than Fig. 6.

### DETAILED DESCRIPTION OF PREFERRED EMBODIMENTS

The socket assembly and a trailer towing assembly comprising the socket assembly will be described below with reference to the figures. The embodiments described below are not limiting, but serve as examples of illustration. As described above, the socket assembly can be retrofitted to vehicles equipped with a retractable or detachable tow hook. In such a case, they are preferably mounted to the vehicle chassis or to a tow hook support unit at such a distance that a retractable tow hook will abut against at least a portion of the locking mechanism such as to unlock said locking mechanism during its movement from the use position towards the retracted position, and to push the socket to the retracted position during its further movement to the retracted position. If the socket is mounted via a socket plate and a support bracket, these should be chosen to have dimensions and shapes enabling this. Alternatively, the socket assembly may be a part of a trailer towing assembly comprising a retractable tow hook.

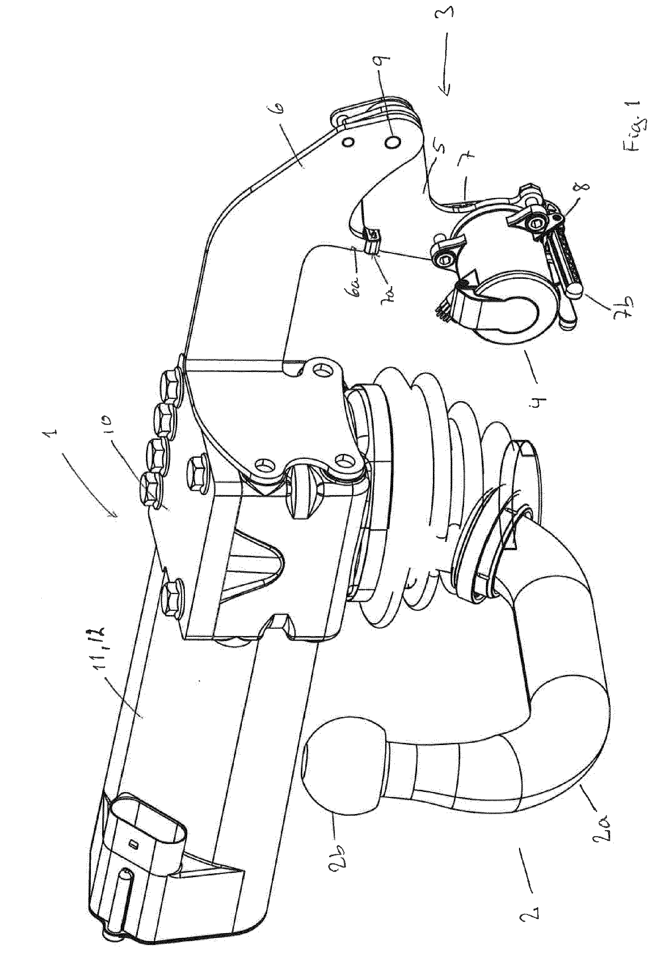

FIG. 1 shows a trailer towing assembly 1 according to an embodiment. FIG. 1 illustrates the towing assembly in the use position. The towing assembly comprises a tow hook 2, here comprising a coupling neck 2a and a coupling ball 2b, to which the coupling part of a trailer can be connected.

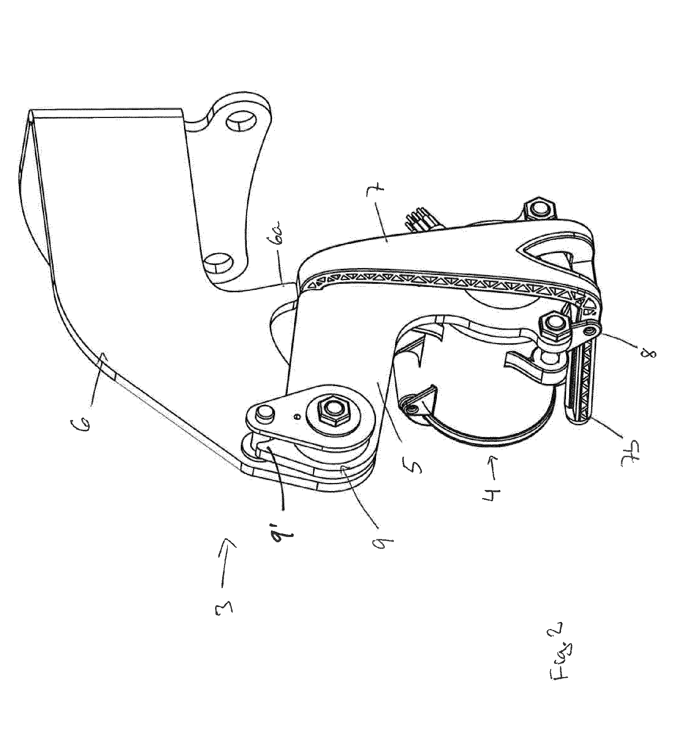

The towing assembly further comprises a socket assembly 3, shown in more detail in FIG. 2 to FIG. 4, for providing an electrical connection of the trailer or the load carrier to the vehicle. The socket assembly comprises a socket 4, for connection of the electric plug of the trailer. The socket 4 is mounted on a socket plate 5, which in turn is mounted to a support bracket 6. In the illustrated embodiment, the socket plate 5 is pivotally mounted to the support bracket 6.

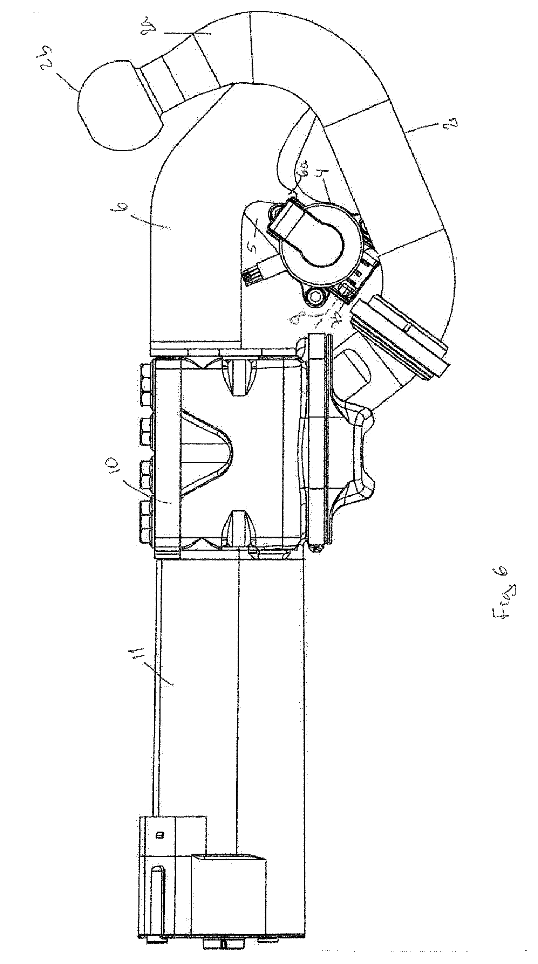

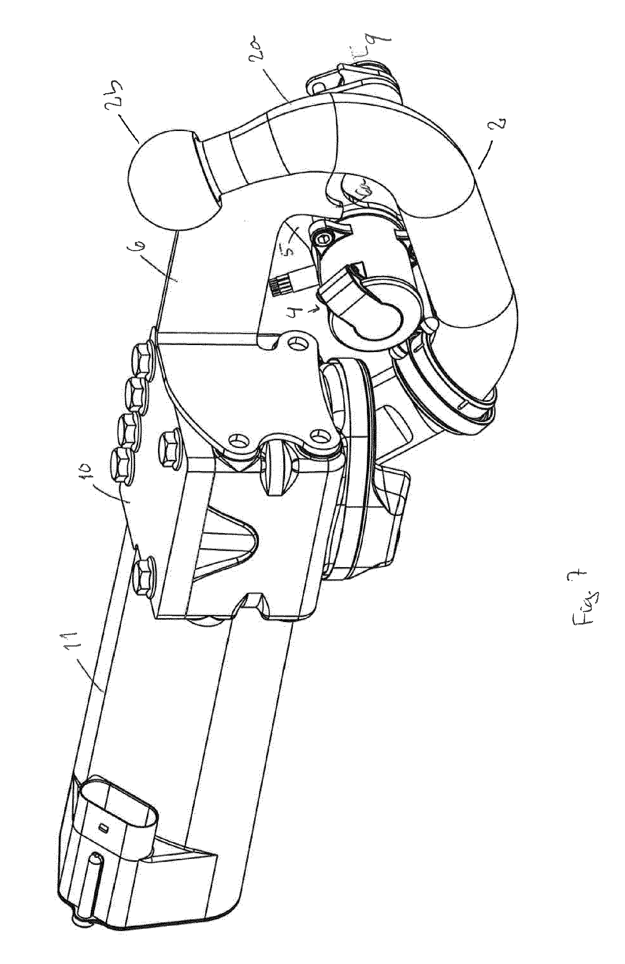

In the embodiment illustrated in FIG. 1, the support plate is mounted such as to be able to be pivoted in the clockwise direction when moving to the retracted position, as described later and as illustrated in FIG. 6 and 7. A locking mechanism is provided for preventing an unintended pivoting motion of the socket 4 and socket plate 5, for example during connection of the electrical plug to the socket. The locking mechanism illustrated in the figures comprises a first locking member 7 connected to the socket plate 5, and which in the illustrated example comprises a locking portion 7a adapted to engage with a second locking member 6a such that a movement of the socket plate, and thereby of the socket, is prevented. In the illustrated example the second locking member 6a is formed by a portion of the support bracket 6. The first locking member 7 has an elongated structure having an abutment portion 7b, whereby the locking portion 7a and the abutment portion 7b are located on opposite sides of the central part of the first locking member 7, whereby the locking portion 7b and the abutment portion 7a are both oriented at an angle to the central part. The first locking member 7 is mounted to the socket plate 5 such as to be able to pivot around a pivot axis 8 if the abutment portion 7b is pushed upwards (in the direction representing upwards in the figure shown). In the illustrated embodiments, the pivot axis 8 will be located close to the lower rear part of the socket 4, opposite the locking portion 7a. The pivot axis 8 is formed in an element connected to, or forming a part of, the socket 4 and/or the socket plate 5. The locking portion 7a is positioned at some distance from the socket 4. Due to this pivoting movement, the locking portion 7a will move out of engagement with the second locking mechanism 6a, whereupon the locking mechanism is unlocked. A torsion spring (not shown) may be provided in the pivot axis 8 mounting such as to provide a force resisting the pivoting motion.

Other means for locking may be provided. For example, alternatively an arrangement may be provided where a first and a second locking member are moved out of contact by a translational movement of one of the members. Alternatively, the unlocking may be realized by a combination of pivoting and translational motion.

The first locking member 7 might be shaped such as to form a cap partly surrounding the socket 4, thereby forming an abutment surface 7b for receiving the part of the tow hook. The first locking member will thereby function as an actuator cap. By pushing the first locking member 7, or the actuator cap, the locking mechanism will be unlocked, allowing movement of the socket into the retracted position.

As mentioned above, after unlocking of the locking mechanism the socket plate 5, and thereby also the socket 4, can be moved to the retracted position. In the embodiment illustrated in FIG. 1, the socket 4 will perform a pivoting motion in the clockwise direction when being moved to the retracted position, as illustrated in FIG. 6 and FIG. 7. The socket plate 5 is mounted to the support bracket 6 at a second pivot axis 9. The mounting of the socket plate 5 to the support bracket 6 is not described in detail herein, but the skilled person will understand the various ways in which this can be done in order that the socket plate 5 can be rotated with respect to the support bracket 6. Preferably, a torsion spring is provided in the second pivot axis 9, such as to resist rotation and urge the socket 4 to the use position. It may further comprise elements such as a shoulder bolt, a rotation block, a spring washer, a slide bearing, etc. Although the movement of the socket 4 from the use position to the retracted position is illustrated by a clockwise pivoting motion around the second pivot axis 9, it can equally be realised by an arrangement providing for another type of movement, such as a pivoting motion in the anticlockwise direction.

In the embodiment illustrated in FIG. 1, the tow hook 2 is connected to a tow hook support unit 10 in a way which enables the movement of the tow hook 2 between the use position and the retracted position. The details of this connection are not further disclosed here within, but are known in the art. Further, the socket assembly 3 is mounted to the tow hook support unit 10 via the support bracket 6. The tow hook support unit 10 is mounted to a tow cross bar 11 which is adapted to be mounted to a vehicle. Alternatively, the socket assembly 3 may be mounted directly to the tow cross bar 11 instead of to the tow hook support unit 10. The support bracket 6 is then adapted such as to be mounted to the tow cross bar 11.

An electrical motor 12 is arranged to facilitate the displacement of the tow hook 2, at least a portion of the distance between the use position and the retracted position. The electrical motor 12 can also be used to lock the tow hook 2 in any of the positions via a locking mechanism. The electrical motor 12 can either be mounted on the tow cross bar 11, or form a portion of the tow cross bar 11. In a general aspect, the tow hook assembly can be a fully automatic tow hook assembly, a semi automatic tow hook assembly, or a manually operated tow hook assembly. A semi automatic tow hook assembly generally have either an automatic displacement of the tow hook 2 and a manual lock, or visa verse, wherein a fully automatic tow hook assembly has both automatic locking and automatic displacement of the tow hook 2. A manually operated tow hook assembly is both unlocked and displaced manually by the user.

FIG. 2 illustrates the socket assembly 3 in its use position, at an angle from the rear of the socket assembly. Here the embodiment comprising the first locking member 7 mounted to a pivot axis 8 can be better seen.

The socket assembly 3 is retained in the use position by the cooperation of the locking mechanism and a lock flange 9' arranged on the socket plate 5. The lock flange 9' is associated with the second pivot axis 9 to provide for a pivot stop, preventing the socket plate 5 from further pivoting and thus in a sense assists in defining the use position. The socket plate 5, and the socket 4, is thus locked from pivoting in any direction in the use position. It should be noted however that there are other ways to provide for a pivot stop, and the use position does not need to be defined in this manner.

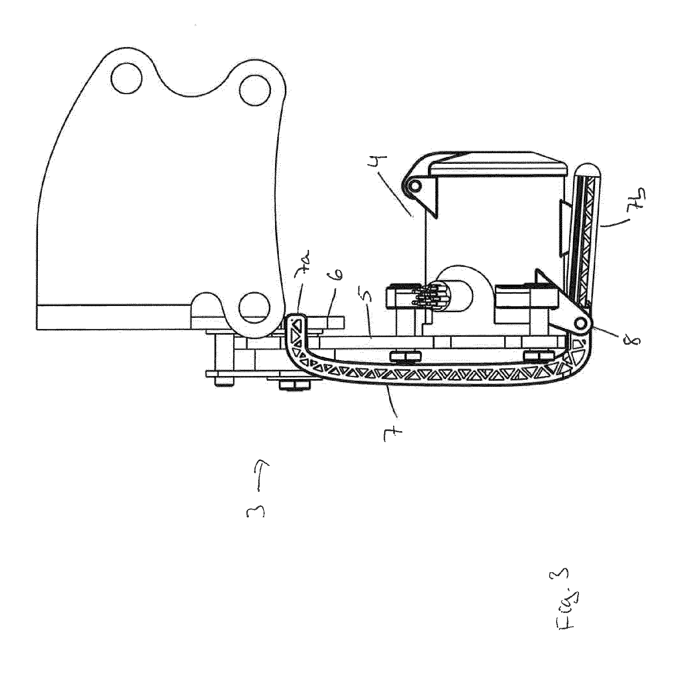

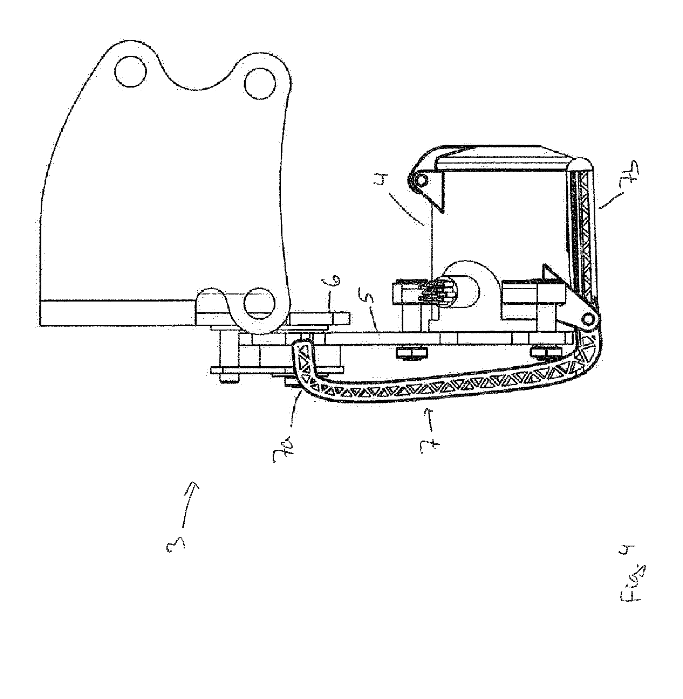

FIG. 3 and FIG. 4 show the socket assembly in the locked and in the unlocked position, respectively. In FIG. 3, the locking portion 7a of the first locking member 7 is locked against the second locking member 6a, which here is formed by a portion of the support bracket 6. If a rotation force is applied to the socket 4, for example during connection of a plug which has to be rotated and pushed into the socket, the second locking member 6a will act as a rotation block preventing a rotation of the socket 4, due to engagement with the locking portion 7a of the first locking member 7. The locking mechanism can be unlocked by displacing the locking portion 7a such that it will not engage with the second locking member 6a, nor any other portion of the support bracket 6, when a rotation force is applied to the socket 4. In the illustrated example, this is enabled as follows. The first locking member 7 is arranged such as to be able to perform a pivoting motion around the pivot axis 8. As illustrated in FIG. 3, the part of the first locking member 7 forming the abutment portion 7b is slightly inclined such as to create a distance to the socket 4. If the abutment portion 7b is pushed towards the socket 4, for example by a portion of the tow hook 2 during its movement from the use position to the retracted position, the first locking member 7 will perform a pivoting motion around the pivot axis 8 whereby the locking portion 7a will move out of engagement with the second locking member 6a, as illustrated in FIG. 4. At this point, the socket plate 5 and socket 4 can be made to perform a pivoting motion around the second pivot axis 9, such as to move toward the retracted position.

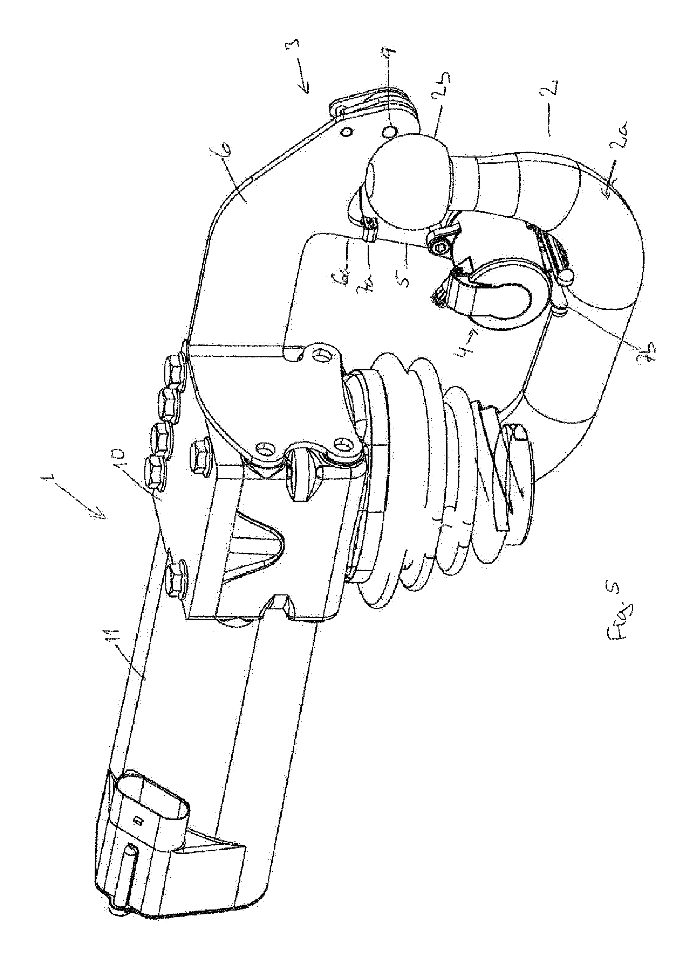

FIG. 5 shows an example where the tow hook 2 is an intermediate position between the use position and the retracted position, while the socket 4 is still locked in the use position. At the positions shown in FIG. 5, the tow hook 2 has reached the point where it starts abutting against the abutment portion 7b of the locking mechanism. In the position shown in FIG. 5, the locking portion 7a is still in engagement with the second locking member 6a, that is, the locking mechanism is in its locked position. In the embodiment shown in FIG. 5, a part of the coupling neck 2a will abut against the locking mechanism. However, it is to be understood that the towing assembly 1 may be arranged such that another part of the tow hook 2 contacts the locking mechanism such as to unlock it. As the movement of the tow hook 2 toward the retracted position continues, the abutment portion 7b will be pushed upwards toward the socket 4, whereby the first locking member 7 pivots around the pivot axis 8, with respect to the socket plate 5 and the locking portion 7a moves out of engagement with the second locking member 6a, thereby unlocking the locking mechanism. Subsequently the socket 4 and the socket plate 5 will follow the movement of the tow hook 2 to the retracted position, that is, the socket 4 and the socket plate 5 are made to pivot with respect to the support bracket 6.

FIG. 6 and 7 show the towing assembly with the tow hook 2 and the socket 4 in the retracted position, viewed from two different angles. As can be seen, the socket 4 has followed the tow hook 2 to the retracted position. The tow hook support unit 10 is constructed such that the tow hook 2 stays in the retracted position, until the user pulls it or otherwise operates the tow hook 2 such as to move it to the use position. When the towing assembly is in the retracted position as illustrated in FIG. 6 and 7, the tow hook 2 keeps the socket 4 in the retracted position, by blocking a movement of the socket 4.

When the tow hook 2 is moved from the retracted position to the use position, the socket 4 will fall back to the use position, whereby the locking mechanism will fall back in the locked position such as to automatically lock the socket 4 in the use position. As mentioned above, a torsion spring may preferably be provided both in the pivot axis 8 and in the second pivot axis 9. When the socket 4 is in the use position, the torsion spring in the pivot axis 8 will provide a spring force resisting unlocking of the locking mechanism. The torsion spring which is provided in the second pivot axis 9 will provide a force resisting rotation toward the retracted position. In the retracted position, the torsion spring provided in the second pivot axis 9 will provide a force urging the socket 4 toward the use position, such that the socket plate 5 and socket 4 fall back to the use position when the tow hook 2 is moved from the retracted position toward the use position. Subsequently, the torsion spring provided in the pivot axis 8 will urge the locking mechanism to the locked position when the tow hook 2 is moved out of contact with the locking mechanism.

If the socket assembly described above does not form part of a towing assembly as described above, or is not intended to be used together with a retractable tow hook but with a detachable tow hook it is preferably provided with a second locking mechanism locking it in its retracted position, in order to keep the socket assembly in the retracted position when the tow hook is removed. Further, in this case, the socket assembly is not moved by abutment of the tow hook as described above, but manually by the user.

It should be understood, that the embodiments described above are not limiting, but should be seen as examples. The socket assembly and the towing assembly may be modified within the scope of the appended claims. For example, the tow hook and the socket may be adapted to rotate in either the direction indicated by the figures, or in the opposite direction. The position of the socket with respect to the tow hook, and thus especially the dimensions of the socket plate and/or the support bracket, can be adapted in dependence of the geometry of the tow hook.

## Claims

1. A socket assembly (3) for use together with a retractable or detachable tow hook (2) for a vehicle, whereby said socket assembly (3) comprises a socket (4) for providing an electrical connection between a trailer or load carrier and said vehicle;
whereby said socket assembly (3) is adapted to be mounted to said vehicle; whereby said socket (4) is arranged to be movable between a retracted position and a use position;
**characterized by**
a locking mechanism for locking said socket in said use position, said locking mechanism being adapted to be unlocked such as to allow said socket (4) to be moved from said use position to said retracted position.

2. The socket assembly (3) according to claim 1, wherein said locking mechanism is adapted to lock said socket (4) from a pivotal motion.

3. The socket assembly (3) according to claim 1 or 2, wherein said socket assembly (3) is adapted to be mounted to a unit (10, 11) supporting said tow hook (2).

4. The socket assembly (3) according to any one of the previous claims, wherein said locking mechanism is adapted to be unlocked by said retractable tow hook (2).

5. The socket assembly (3) according to any one of the previous claims, wherein said locking mechanism comprises a first locking member (7) adapted to cooperate with a second locking member (6a);
wherein said first locking member (7) is connected to said socket (4); and wherein said second locking member (6a) is arranged to prevent motion of said first locking member (7) thereby locking said socket (4) in said use position.

6. The socket assembly (3) according to claim 5, wherein said first locking member (7) comprises an abutment portion (7b) having a surface adapted for abutment of said retractable tow hook (2).

7. The socket assembly (3) according to any one of claims 5 or 6, wherein said first locking member (7) is adapted to perform a pivoting motion, whereby a locking portion (7a) of said first locking member (7) is displaced from engagement with said second locking member (6a), whereby said locking mechanism is unlocked by said pivoting motion.

8. The socket assembly (3) according to claim 7, wherein said first locking member (7) is adapted to perform said pivoting motion around a pivot axis (8), whereby said pivot axis (8) and said locking portion (7a) are located on opposite sides of said socket (4).

9. The socket assembly (3) according to any one of claims 5 to 8, wherein said first locking member (7) is arranged to partly enclose said socket (4).

10. The socket assembly (3) according to any one of claims 5 to 9, wherein said first locking member (7) is adapted to perform a translational motion, whereby a locking portion (7a) of said first locking member (7) is displaced from engagement with said second locking member (6a), whereby said locking mechanism is unlocked by said translational motion.

11. The socket assembly (3) according to any one of claims 7 to 10, further comprising a torsion spring for resisting said pivoting motion and/or a spring for resisting said translational motion of said first locking member (7).

12. The socket assembly (3) according to any one of the previous claims, wherein said socket (4) is arranged to be moved between said use position and said retracted position by a pivot motion of said socket (4), and wherein said locking mechanism is adapted to block said pivot motion.

13. A trailer towing assembly (1) for a vehicle, said towing assembly (1) comprising a tow hook (2) and a socket assembly (3) according to any one of the previous claims;
whereby said tow hook (2) is arranged to be movable between a retracted position and a use position;
wherein said locking mechanism is adapted to be unlocked by said tow hook (2).

14. The towing assembly (1) according to claim 13, wherein said socket (4) and said tow hook (2) are arranged such that said socket (4) is adapted to be moved to a retracted position by movement of said tow hook (2) to said retracted position after said locking mechanism is unlocked.

15. The towing assembly (1) according to any one of claims 13 to 14, wherein said locking mechanism is adapted to be unlocked by abutment of at least a portion of said tow hook (2) to at least a portion of said locking mechanism.

16. A method for displacing a socket (4) of a socket assembly (3) in a trailer towing assembly (1) for a vehicle between a use position and a retracted position, said socket assembly (3) comprising a locking mechanism to lock said socket (4) in at least said use position, whereby said method comprising the steps of;
- unlocking said locking mechanism of said socket assembly (3) by bringing a tow hook (2) into abutment with said locking mechanism and;
- displacing said socket (4) using said tow hook (2).
